# EUROPÄISCHE PATENTSCHRIFT

(11) **EP 2 735 815 B1**
(45) Veröffentlichungstag und Bekanntmachung des Hinweises auf die Patenterteilung: **02.03.2016**
(21) Anmeldenummer: 13191958.1
(22) Anmeldetag: 07.11.2013
(51) Int. Cl.: F24J 2/32, F24J 2/46, F24J 2/24, F24J 2/50, F24J 2/05, F24J 2/26, F24J 2/40

(54) **Solaranlage**
Solar array
Installation solaire

(30) Priorität: 27.11.2012 DE 102012023093
(43) Veröffentlichungstag der Anmeldung: 28.05.2014
(73) Patentinhaber: Ritter Energie- und Umwelttechnik GmbH & Co. KG, 72135 Dettenhausen (DE)
(72) Erfinder: Taafel, Klaus, 76767 Hagenbach (DE); Bauer, Irmgard, 76337 Waldbronn (DE); Kettner, Christiane, 78580 Bärenthal (DE); Weidemann, Thomas, 87634 Obergünzburg (DE)
(74) Vertreter: Dimmerling & Huwer

(56) Entgegenhaltungen:
- CN-A- 101 988 749
- CN-A- 102 367 995
- CN-U- 201 593 877

## Beschreibung

Die Erfindung betrifft eine Solaranlage mit einem Solarkollektor, der mindestens eine Kollektorröhre mit einem Hüllrohr aufweist, in das ein Register eingreift, wobei zwischen dem Hüllrohr und dem Register eine mit der Atmosphäre verbundene Innenhöhlung gebildet ist, und wobei das Register mit einer Zuleitung und einer Ableitung verbunden ist, mittels welchen dem Register ein Wärmeträger zuführbar beziehungsweise entnehmbar ist.

Eine derartige, von der Anmelderin hergestellte Solaranlage ist aus der Praxis bekannt. Sie hat sich in einer Vielzahl von Anwendungen vor allem deshalb bewährt, weil das Hüllrohr als Vakuumröhre ausgestaltet ist und daher eine sehr wirksame thermische Isolierung des Registers gegenüber der Umgebung des Solarkollektors ermöglicht. Dadurch kann das Sonnenlicht auch bei geringen Außentemperaturen effektiv in Wärme umgesetzt werden, um den durch das Register geleiteten Wärmeträger zu erhitzen. Um eine möglichst lange Lebensdauer und eine weitgehende Wartungsfreiheit der meist an schwer zugänglichen Stellen, wie zum Beispiel auf Hausdächern installierten Solarkollektoren zu ermöglichen, werden die Vakuumröhren aus Borsilikatglas und das Register aus einem rostfreien Metall, wie Edelstahl und Kupfer gefertigt. Das aus diesen Metallen hergestellte Register hält den beim Betrieb der Solaranlage auftretenden hohen Temperaturen und den damit einhergehenden Drücken im Wärmeträger dauerhaft stand. Nachteilig ist jedoch, dass die Rohstoffpreise für Edelstahl und Kupfer ziemlich hoch sind. Die Solaranlage ist daher noch relativ teuer.

Aus CN 201 593 877 U ist ferner eine Solaranlage mit einem Solarkollektor bekannt, der mindestens eine Kollektorröhre mit einem Hüllrohr aufweist, in das ein Register eingreift. Zwischen dem Hüllrohr und dem Register ist eine Innenhöhlung gebildet, die zur Wärmeisolierung des Registers evakuiert ist. Das Register ist mit einer Zuleitung und einer Ableitung verbunden ist, mittels welchen dem Register ein Wärmeträger zuführbar beziehungsweise entnehmbar ist. Das Register besteht aus nicht rostfreien, warm- und druckfesten Aluminium.

Aufgabe der Erfindung ist es, eine Solaranlage der eingangs genannten Art zu schaffen, die kostengünstig herstellbar ist, aber dennoch eine lange Lebensdauer und einen weitgehend wartungsfreien Betrieb ermöglicht.

Diese Aufgabe wird mit den Merkmalen des Anspruchs 1 gelöst. In vorteilhafter Weise ist also das Register aus kostengünstig verfügbarem nicht rostfreien, warm und druckfesten Stahl gefertigt. Dadurch kann der Solarkollektor bzw. dessen Register sehr preiswert hergestellt werden. Da durch die Schutzeinrichtung die Bildung von Kondenswasser auf der Außenoberfläche des Registers verhindert wird, wird das Register während des Betriebs der Solaranlage an seiner Außenoberfläche stets trocken gehalten. Dadurch wird trotz des nicht rostfreien. Register-Werkstoffs über eine lange Standzeit eine schädliche Korrosion am Register vermieden, so dass die erforderliche Druckfestigkeit des Registers über die gesamte Lebensdauer der Solaranlage gewährleistet ist.

Bei einer bevorzugten Ausführungsform der Erfindung weist die Schutzeinrichtung eine Heizeinrichtung für das Register, einen Umgebungstemperatursensor zur Erfassung der Umgebungstemperatur des Solarkollektors und einen Kollektorausgangstemperatursensor zur Erfassung der Kollektortemperatur an der Ableitung des Solarkollektors auf, wobei der Umgebungstemperatursensor und der Kollektorausgangstemperatursensor über eine Steuer- und/oder Regeleinrichtung mit der Heizeinrichtung verbunden sind. Die Heizeinrichtung kann beispielsweise einen brennstoffgefeuerten Heizkessel aufweisen, mittels dem der durch das Register geleitete Wärmeträger bei Bedarf erwärmt werden kann, um bei fallenden Außentemperaturen eine Kondenswasserbildung am Register zu vermeiden. Als Wärmeträger wird bevorzugt Wasser verwendet. In vorteilhafter Weise kann dadurch eine Trennung zwischen dem Wärmeträger für den Solarkollektor und dem Wärmeträger für den Heizkessel entfallen, d.h. es kann ein einheitlicher Wärmeträger für die gesamte Solaranlage verwendet werden. Der Wärmeträger kann dabei durch den Solarkollektor, den Heizkessel und mindestens einen Heizkörper einer Wohnraumheizung fließen. Dies macht die Solaranlage kostengünstig.

Bei einer vorteilhaften Ausgestaltung der Erfindung weist die Heizeinrichtung einen Wärmespeicher auf, der über die Zuleitung und die Ableitung mit dem Solarkollektor zu einem Wärmeträgerkreislauf verbunden ist, wobei in dem Wärmeträgerkreislauf eine Pumpe angeordnet ist, und wobei der Umgebungstemperatursensor und der Kollektorausgangstemperatursensor über die Steuer- und/oder Regeleinrichtung mit der Pumpe verbunden sind. Dabei kann bei ausreichender Sonneneinstrahlung Wärmeenergie im Wärmespeicher gespeichert und beispielsweise nachts an kalten Tagen zum Beheizen des Registers aus dem Wärmespeicher entnommen werden. Die Steuer- und/oder Regeleinrichtung ist dabei bevorzugt derart ausgestaltet, dass sie, wenn die Umgebungstemperatur des Solarkollektors unter einen vorbestimmten ersten Temperaturwert von z.B. 3°C abfällt, in einen Frostschutz-Betriebszustand gebracht wird. In diesem Betriebszustand wird mit Hilfe der Pumpe derart warmer Wärmeträger in die Zuleitung gepumpt, dass die Temperatur des Wärmeträgers, der sich in einem Leitungsabschnitt der Zuleitung befindet, der im Freien bzw. in einem frostgefährdeten Bereich verläuft, nicht unter einen vorbestimmten zweiten Temperaturwert fällt, der kleiner ist als der erste Temperaturwert und größer ist als 0 °C. Der zweite Temperaturwert beträgt vorzugsweise 1°C. Der Frostschutz-Betriebszustand wird deaktiviert, wenn die Umgebungstemperatur des Solarkollektors eine vorbestimmte Zeitdauer lang, die zum Beispiel 12 Stunden betragen kann, einen dritten Temperaturwert, der größer ist als der zweite Temperaturwert und z.B. 4°C betragen kann, überschreitet. Durch den Frostschutz-Betriebszustand wird verhindert, dass sich der in dem im Freien verlaufenden Leitungsabschnitt der Zuleitung befindliche Wärmeträger bei Außentemperaturen, die unter dem ersten Temperaturwert liegen, so stark abkühlt, dass er, wenn er nach dem Einschalten der Pumpe in den Solarkollektor transportiert wird, diesen abkühlt. Somit wird nach dem Einschalten der Pumpe die Bildung von Kondenswasser an der Außenoberfläche des Registers und eine damit einhergehende Korrosionsgefahr vermieden. Außerdem wird der Solarkollektor durch den Frostschutz-Betriebszustand vor dem Einfrieren geschützt.

Vorteilhaft ist, wenn die Steuer- und/oder Regeleinrichtung derart ausgestaltet ist, dass die Kollektorausgangstemperatur nicht unter die Umgebungstemperatur fällt. Die in der Innenhöhlung des Hüllrohrs befindliche Luft kann sich dann bei normalen Betriebsbedingungen nicht am Register abkühlen, so dass sich dort kein Kondenswasser bildet.

Bei einer zweckmäßigen Ausgestaltung der Erfindung ist die Steuer- und/oder Regeleinrichtung derart ausgestaltet, dass die Kollektortemperatur an der Ableitung des Solarkollektors einen vorbestimmten Mindestwert nicht unterschreitet. Der Mindestwert kann beispielsweise zwischen 3 und 5°C betragen, insbesondere 4°C. Dadurch kann die Bildung von Kondenswasser am Register noch wirksamer unterdrückt werden.

Bei einer Weiterbildung der Erfindung weist die Steuer- und/oder Regeleinrichtung einen Speicher auf, in dem thermische Kenngrößen für den Solarkollektor, die Zuleitung, die Ableitung und den Wärmeträger abgelegt sind, wobei die Schutzeinrichtung einen Volumenstromsensor zur Erfassung des dem Solarkollektor zugeführten Wärmeträger-Volumenstroms, einen Vorlauftemperatursensor zur Erfassung der Vorlauftemperatur des in der Ableitung befindlichen Wärmeträgers und einen Rücklauftemperatursensor zur Erfassung der Rücklauftemperatur des in der Zuleitung befindlichen Wärmeträgers aufweist, und wobei die Steuer- und/oder Regeleinrichtung einen mit dem Speicher verbundenen Mikroprozessor hat, wobei in dem Speicher ein auf dem Mikroprozessor ablaufbares Betriebsprogramm abgelegt ist, mittels welchem aus den Kenngrößen und Messsignalen für den Volumenstrom, die Rücklauftemperatur, die Umgebungstemperatur und die Kollektortemperatur an der Ableitung des Solarkollektors durch eine Echtzeitsimulation der Temperaturen in der Zuleitung und eine Berechnung der Auskühlgeschwindigkeit der im Freien bzw. im Forstbereich liegenden Anlagenteile der Solaranlage eine Pumprate ermittelt wird, mit der die Pumpe mittels der Steuer- und/oder Regeleinrichtung derart ansteuerbar ist, dass die Temperatur an der Außenoberfläche des Registers und in der Zuleitung nicht unter einen bestimmten Grenzwert oberhalb der Umgebungstemperatur fällt. Durch diese Maßnahme kann die Temperatur an der Außenoberfläche des Registers mit großer Präzision bestimmt und über der Umgebungstemperatur gehalten werden, ohne dass an der Außenoberfläche eine Temperatursensor vorhanden sein muss.

Vorteilhaft ist, wenn der Wärmespeicher in einem Gebäude und der Solarkollektor im Freien angeordnet ist, und wenn die Kenngrößen Kennwerte für
- die Länge und der Inhalt eines innerhalb des Gebäudes befindlichen Leitungsabschnitts der Zuleitung,
- die Länge und der Inhalt eines im Freien befindlichen Leitungsabschnitts der Zuleitung,
- die Länge und der Inhalt eines innerhalb des Gebäudes befindlichen Leitungsabschnitts der Ableitung,
- die Länge und der Inhalt eines im Freien befindlichen Leitungsabschnitts der Ableitung, und
- die Größe des Solarkollektors
umfassen. Mit Hilfe dieser Kenngrößen kann die Temperatur an der Außenoberfläche des Registers auf einfache Weise aus den Messsignalen für den Volumenstrom, die Vorlauftemperatur, die Rücklauftemperatur und die Umgebungstemperatur im voraus berechnet werden. Dabei ist es sogar möglich, dass Solaranlage zwischen einem ersten Betriebszustand, in dem die Berechnung unter Verwendung der Kenngrößen durchgeführt wird, und einem zweiten Betriebszustand, in dem die Kenngrößen gelernt werden, umschaltbar ist. Zum Lernen der Kenngrößen kann warmer Wärmeträger aus dem Wärmespeicher und/oder dem Heizkessel durch den Wärmeträgerkreislauf geleitet werden, wobei mit den Sensoren der zeitliche Verlauf des Volumenstroms, der Vorlauftemperatur, der Rücklauftemperatur und der Umgebungstemperatur aufgezeichnet wird. Aus dem Verlauf dieser Messwerte können mit Hilfe eines mathematischen Modells der Solaranlage die Kenngrößen bestimmt werden.

Ein Primärenergie sparender Betrieb der Solaranlage wird dadurch ermöglicht, dass die Steuer- und/oder Regeleinrichtung derart ausgestaltet ist, dass die Pumpe im Intervallbetrieb betreibbar ist. Während die Schutzeinrichtung aktiv ist, sind die Intervalle vorzugsweise kurz bemessen und können beispielsweise einige Sekunden betragen.

Der Baustahl, aus dem das Register oder mindestens ein Abschnitt des Registers gefertigt ist, ist bevorzugt ein druckfester Stahl, der vorzugsweise normalgeglüht ist. Ein solcher Stahl wird unter der Stahlsortenbezeichnung P195GH gehandelt.

Das Hüllrohr ist bevorzugt als Vakuumröhre mit einer Außenwand und einer davon beabstandeten Innenwand ausgestaltet, zwischen denen ein evakuierter Zwischenraum angeordnet ist. Dadurch wird eine hoch wirksame thermische Isolierung des Registers gegen die Umgebung des Solarkollektors und somit ein entsprechend hoher Wirkungsgrad der Solaranlage ermöglicht.

Nachfolgend ist ein Ausführungsbeispiel der Erfindung anhand der Zeichnung näher erläutert. Es zeigt:
- Fig. 1: eine schematische Darstellung einer Solaranlage,
- Fig. 2: eine Vorderansicht eines Solarkollektors mit drei Kollektorröhren, wobei bei der linken Kollektorröhre nur das Register und bei der mittleren Kollektorröhre die Vakuumröhre und ein darin befindliches Wärmeleitblech nur teilweise dargestellt sind, und
- Fig. 3: einen Längsschnitt durch den Solarkollektor.

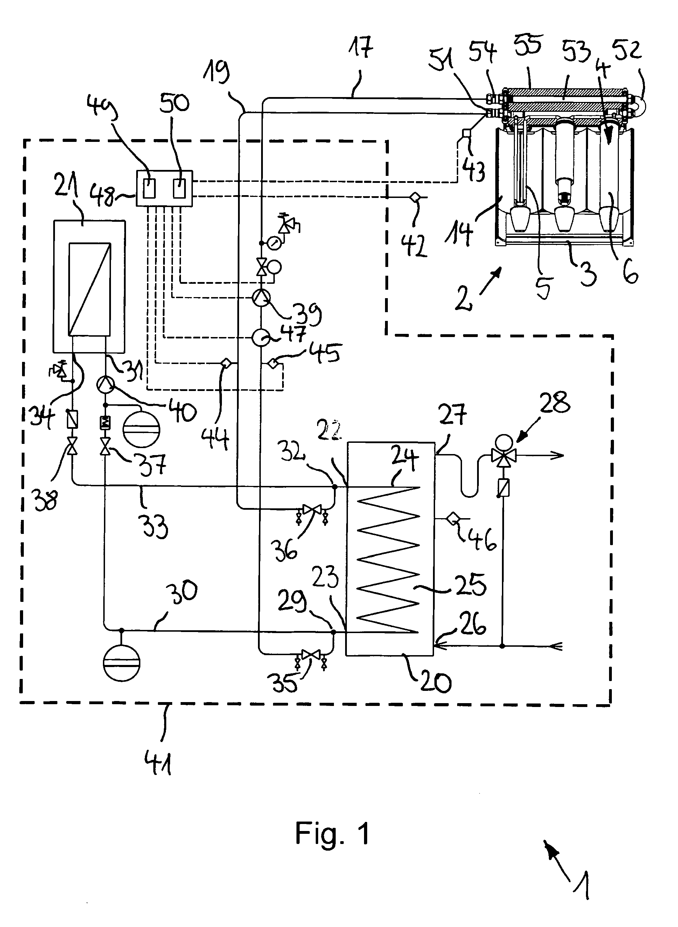

Eine in Fig. 1 im Ganzen mit 1 bezeichnete Solaranlage hat einen Solarkollektor 2 mit einer Halterung 3, an der mehrere Kollektorröhren 4 angeordnet sind. Die Kollektorröhren 4 sind in einer Ebene parallel zueinander ausgerichtet und durch Zwischenräume seitlich voneinander beabstandet.

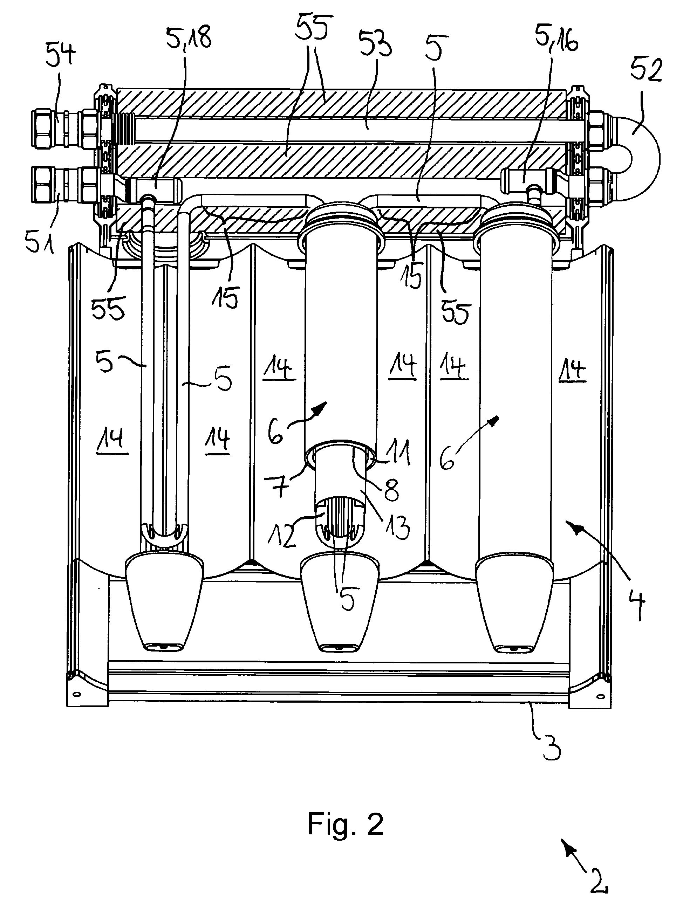

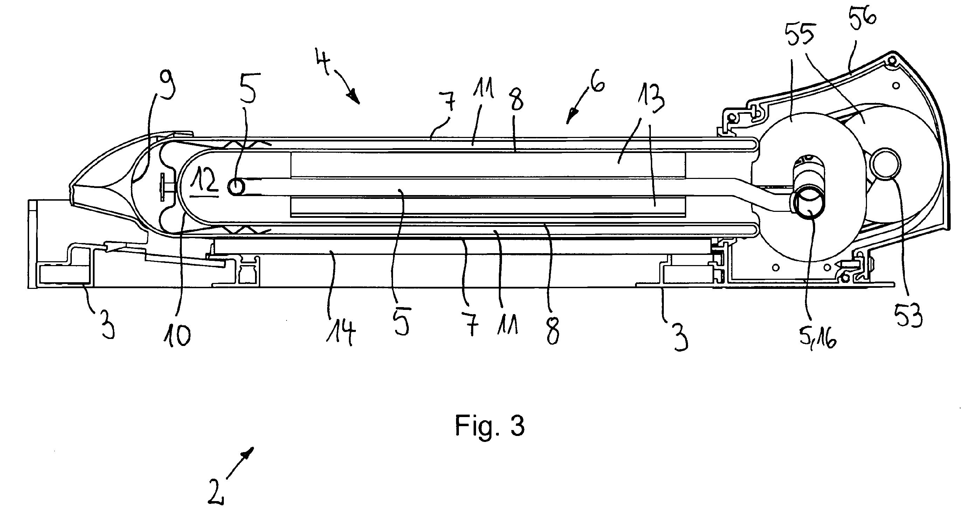

Wie in Fig. 2 und 3 erkennbar ist, weisen die Kollektorröhren 4 jeweils ein Hüllrohr 6 auf, in das ein Register 5 eingreift. Die Hüllrohre 6 sind jeweils als doppelwandige Vakuumröhre mit einer im Wesentlichen zylindrischen Außenwand 7 und einer konzentrisch dazu angeordneten zylindrischen Innenwand 8 ausgestaltet. Die Außenwand 7 und die Innenwand 8 bestehen aus Glas und sind jeweils an ihrem einen Axialende durch einen etwa halbkugelförmigen Wandungsbereich 9, 10 geschlossen. An ihrem anderen Axialende sind die Außenwand 7 und die Innenwand 8 miteinander verschmolzen. In radialer Richtung sind die Außenwand 7 und die Innenwand 8 durch einen evakuierten Zwischenraum 11 voneinander beabstandet. Die Hüllrohre 6 dienen als Wärmeisolierung, welche die innerhalb der Hüllrohre 6 befindlichen Abschnitte des Registers 5 thermisch gegen die Umgebung des Solarkollektors 1 isolierten.

Zwischen der Innenwand 8 und dem Register 5 jeder Kollektorröhre 4 ist jeweils eine Innenhöhlung 12 gebildet ist, die an dem von den halbkugelförmigen Wandungsbereichen 9, 10 entfernten Ende der Hüllrohre 6 über eine in der Zeichnung nicht näher dargestellte Belüftungsöffnung mit der Atmosphäre verbunden ist. Über die Belüftungsöffnung können eventuelle Luftdruckschwankungen zwischen der Innenhöhlung 12 und der Atmosphäre ausgeglichen werden.

Um die Sonnenenergie besser nutzbar zu machen, ist auf die dem Zwischenraum 11 zugewandte Außenseite der Innenwand 8 und des halbkugelförmigen Wandungsbereichs 10 eine in der Zeichnung nicht näher dargestellte Absorptionsschicht aufgebracht, die eine niedrige Emission und eine hohe Absorption aufweist. Zwischen der Innenwand 8 und dem Register 5 ist ein Wärmeleitblech 13 angeordnet, welches die Innenwand 8 wärmeleitend mit dem Register 5 verbindet.

Zwischen den Rückseiten der Kollektorröhren 4 und der Halterung 3 ist ein Reflektor 14 angeordnet, der für jede Kollektorröhre 4 jeweils eine parabolzylindrische Reflektorfläche aufweist, die das darauf auftreffende Sonnenlicht auf die Absorptionsschicht der betreffenden Kollektorröhre 4 projiziert.

Das Register 5 besteht aus einem nicht rostfreien, warm- und druckfesten Stahl. Die innerhalb der Hüllrohre 6 verlaufenden Abschnitte des Registers 5 weisen jeweils einen etwa U-förmigen Verlauf mit zwei parallel zur Längserstreckung der Hüllrohre 6 angeordneten U-Schenkeln und einem diese miteinander verbindenden bogenförmigen Rohrabschnitt auf. Es sind aber auch andere Ausgestaltungen des Registers 5 denkbar. So können anstelle der U-fömigen Abschnitte auch ein Rohrabschnitte vorgesehen sein, die ein inneres und ein äußeres Rohrelement aufweisen, die koaxial zueinander angeordnet und an ihrem dem halbkugelförmigen Wandungsbereich 10 miteinander verbunden sind.

In Fig. 2 ist erkennbar, dass die innerhalb der Hüllrohre 6 verlaufenden Abschnitte des Registers 5 in Reihe geschaltet sind und durch Verbindungsabschnitte 15, die verlaufen quer zu den U-Schenkeln verlaufen, miteinander verbunden sind.

Ein innerhalb eines Hüllrohrs 6 einer ersten Kollektorröhre 4 (in Fig. 2 links) angeordneter U-Schenkel ist über einen Ableitungsabschnitt 18 des Registers 5 mit einer Ableitung 19 verbunden, mittels welcher der Wärmeträger dem Register 5 entnehmbar ist. Der Ableitungsabschnitt 18 weist an seinem freien Ende ein im Freien angeordnetes, lösbar mit der Ableitung 19 verbindbares erstes Anschlussstück 51 auf, das aus einem nichtrostenden Metallwerkstoff, wie zum Beispiel Kupfer oder Edelstahl besteht. Ein innerhalb eines Hüllrohrs 6 einer letzten Kollektorröhre 4 (in Fig. 2 rechts) angeordneter U-Schenkel des Registers 5 ist über einen Zuleitungsabschnitt 16, ein Bogenrohr 52 und eine Verbindungsleitung 53 mit einem zweiten Anschlussstück 54 verbunden. Das Bogenrohr 52, die Verbindungsleitung 53 und das zweiten Anschlussstück 54 bestehen aus einem nichtrostenden Metallwerkstoff, wie zum Beispiel Kupfer oder Edelstahl. Die innerhalb der Hüllrohre 6 verlaufenden Abschnitte des Registers 5, die Verbindungsabschnitte 15, der Zuleitungsabschnitt 16 und der Ableitungsabschnitt 18 bestehen aus einem nicht rostfreien, warm- und druckfesten Stahl und können einstückig miteinander verbunden sein. Der Zuleitungsabschnitt 16, die Verbindungsabschnitte 15, der Ableitungsabschnitt 18 und die Verbindungsleitung 53 werden von einer Wärmeisolierung 55 umgrenzt, die hinter einer an der Halterung 3 vorgesehenen Abdeckung 56 angeordnet ist. Die Abdeckung 56, das Bogenrohr 52, die Anschlussstücke 51, 54 und die Hüllrohre 3 dichten das Register 5 gegen den Zutritt von Regenwasser und Schmutz ab.

Um zu verhindern dass sich beim Betrieb der Solaranlage 1 an dem aus nicht rostfreien, warm und druckfesten Stahl bestehenden Register 5 Korrosion bildet, weist die Solaranlage 1 eine Schutzein richtung auf, mittels der das Register 5 bei Bedarf derart beheizbar ist, dass die Bildung von Kondenswasser an der an der dem Wärmeträger abgewandten Außenoberfläche des Registers 5 verhindert wird.

Die Schutzeinrichtung weist zu diesem Zweck eine Heizeinrichtung mit einem Wärmespeicher 20 und einem Heizkessel 21 auf. Der Wärmespeicher 20 hat einen Vorlaufanschluss 22 und einen Rücklaufanschluss 23, die an einem Wärmetauscher 24 angeschlossen sind, der thermisch mit einem im Inneren des Wärmespeichers 20 befindlichen Wasserreservoir 25 gekoppelt ist. Zum Einleiten von kaltem Wasser in das Wasserreservoir 25 weist dieses einen Kaltwasseranschluss 26 auf, der mit einer Kaltwasserleitung eines Wasserversorgungsnetzes verbunden ist. Zum Entnehmen von warmem Wasser weist das Wasserreservoir 25 oberhalb des Kaltwasseranschlusses 26 einen Warmwasseranschluss 27 auf, an dem eine Warmwasserleitung angeschlossen ist. Die Warmwasserleitung und die Kaltwasserleitung sind über eine Mischbatterie 28 mit einer in der Zeichnung nicht näher dargestellte Wasserentnahmeeinrichtung, wie z.B. einem Wasserhahn oder einer Dusche verbunden.

Der Rücklaufanschluss 23 des Wärmespeichers 20 ist über eine erste Verzweigungsstelle 29 mit der Zuleitung 17 für den Solarkollektor 2 und einer ersten Leitung 30 verbunden, die zu einem Einlassanschluss 31 des Heizkessels 21 führt. Der Vorlaufanschluss 22 des Wärmespeichers 20 ist über eine zweite Verzweigungsstelle 32 mit der Ableitung 19 des Solarkollektors 2 und einer zweiten Leitung 33 verbunden, die zu einem Auslassanschluss 34 des Heizkessels 21 führt. In der Zuleitung 17, der Ableitung 19, der ersten Leitung 30 und der zweiten Leitung 33 ist jeweils ein Absperrventil 35, 36, 37, 38 angeordnet.

Zum Fördern des Wärmeträgers durch den Solarkollektor 2 ist in der Zuleitung 17 eine erste Pumpe 39 angeordnet. Die Förderrichtung der ersten Pumpe 39 ist so gewählt, das der Wärmeträger über die Ableitung 19 vom Ableitungsabschnitt 18 des Solarkollektors 2 zum Vorlaufanschluss 22 des Wärmespeichers 20 transportiert wird, wenn die Ventile 35, 36 geöffnet sind.

Eine zweite, in der zweiten Leitung 33 angeordnete Pumpe 40 dient dazu, den Wärmeträger durch den Heizkessel 21 zuleiten. Die Förderrichtung der zweiten Pumpe 40 ist so gewählt, das der Wärmeträger über die zweite Leitung 33 vom Auslassanschluss 34 des Heizkessels 21 zum Vorlaufanschluss 22 des Wärmespeichers 20 transportiert wird, wenn die Ventile 37, 38 geöffnet sind.

In Fig. 1 ist erkennbar, dass der Wärmespeicher 20 und der Heizkessel 21 im frostgeschützten Inneren eines beheizbaren Gebäudes 41 und der Solarkollektor 2 außerhalb des Gebäudes 41 im Freien angeordnet sind. Die Zuleitung 17 weist einen ersten, im Freien verlaufenden Zuleitungsabschnitt und einen zweiten, im Inneren des Gebäudes 41 verlaufenden Zuleitungsabschnitt auf. In entsprechender Weise hat die Ableitung 19 einen ersten, im Freien verlaufenden Ableitungsabschnitt und einen zweiten, im Inneren des Gebäudes 41 verlaufenden Ableitungsabschnitt.

Die Schutzeinrichtung weist mehrere Temperatursensoren auf. Zur Erfassung der Umgebungstemperatur des Solarkollektors 2 ist in unmittelbarer Nähe des Solarkollektors 2 ein Umgebungstemperatursensor 42 im Freien angeordnet. Am Ausgang des Solarkollektors 2 ist zur Erfassung der Kollektortemperatur am Ableitungsabschnitt 18 ein Kollektorausgangstemperatursensor 43 vorgesehen. Zur Messung der Vorlauftemperatur des Wärmeträgers ist an dem innerhalb des Gebäudes 41 befindlichen zweiten Ableitungsabschnitt ein Vorlauftemperatursensor 44 angeordnet. Zur Messung der Rücklauftemperatur des Wärmeträgers ist ein Rücklauftemperatursensor 45 vorgesehen, der an dem innerhalb des Gebäudes 41 befindlichen zweiten Zuleitungsabschnitt angeordnet ist. Zur Erfassung der Speichertemperatur des in dem Wärmespeicher 20 befindlichen Wasserreservoirs 25 weist die Schutzeinrichtung ferner einen Speichertemperatursensor 46 auf.

Wie in Fig. 1 erkennbar ist, weist die Schutzeinrichtung außerdem einen Volumenstromsensor 47 zur Erfassung des dem Solarkollektor 2 zugeführten Wärmeträger-Volumenstroms auf. Der Volumenstromsensor 47 ist ebenfalls in dem zweiten Zuleitungsabschnitt angeordnet.

Der Umgebungstemperatursensor 42, der Kollektorausgangstemperatursensor 43, der Vorlauftemperatursensor 44, der Rücklauftemperatursensor 45, der Speichertemperatursensor 46 und der Volumenstromsensor 47 sind jeweils zur Übermittlung der von ihnen erfassten Messsignale über Signalleitungen mit einer Steuer- und/oder Regeleinrichtung 48 verbunden. Zur Steuerung des Wärmeträgervolumenstroms im Solarkollektor 2 ist die Steuer- und/oder Regeleinrichtung 48 über eine weitere Leitung mit der ersten Pumpe 39 verbunden.

Die Steuer- und/oder Regeleinrichtung 48 weist einen elektronischen Speicher 49 und einen damit zusammenwirkenden Mikroprozessor 50 auf. In dem Speicher 49 sind thermische Kenngrößen für den Solarkollektor, die Zuleitung, die Ableitung und den Wärmeträger abgelegt. Die Kenngrößen umfassen Kennwerte für
- die Länge und der Inhalt des innerhalb des Gebäudes befindlichen Leitungsabschnitts der Zuleitung,
- die Länge und der Inhalt des außerhalb des Gebäudes befindlichen Leitungsabschnitts der Zuleitung,
- die Länge und der Inhalt des innerhalb des Gebäudes befindlichen Leitungsabschnitts der Ableitung,
- die Länge und der Inhalt des außerhalb des Gebäudes befindlichen Leitungsabschnitts der Ableitung,
- den Materialquerschnitt dieser Leitungen,
- die Wärmekapazität der Werkstoffe, aus denen diese Leitungen bestehen und
- die Größe des Solarkollektors.

Die Kenngrößen können aus der bekannten Geometrie des Registers 5 und der innerhalb bzw. außerhalb des Gebäudes 41 befindlichen Abschnitte der Zuleitung 17 und der Ableitung 19, sowie aus Werkstoffkenngrößen des Wärmeträgers und der Materialien aus denen die vorgenannten Teile bestehen, berechnet sein. Bevorzugt werden die thermischen Kenngrößen jedoch experimentell ermittelt, insbesondere indem die Steuer- und/oder Regeleinrichtung 48 in eine Betriebsart gebracht wird, in welcher die Kenngrößen gelernt und im Speicher 49 abgelegt werden.

Wenn die erste Pumpe 39 den Wärmeträger durch den Solarkollektor 2 fördert, wird mittels eines auf dem Mikroprozessor 50 ablaufenden Betriebsprogramms anhand der Messsignale für die Vorlauftemperatur, die Rücklauftemperatur und den Volumenstrom sowie einer im Speicher 49 abgelegten Kenngröße für die Wärmekapazität des Wärmeträgers die vom Solarkollektor 2 produzierte Wärmeleistung errechnet. Wenn genügend Wärmeenergie produziert wird, und die Temperatur im Wärmespeicher einen vorbestimmten Maximalwert nicht überschreitet, wird die erzeugte Solarwärme über den Wärmetauscher 24 in den Wärmespeicher 20 übertragen.

Das Betriebsprogramm der Steuer- und/oder Regeleinrichtung umfasst ein Simulationsprogramm, mittels dem aus den im Speicher 49 abgelegten Kenngrößen und Messsignalen für den Volumenstrom, der Vorlauftemperatur und der Rücklauftemperatur und der Umgebungstemperatur mit Hilfe des Mikroprozessors 50 ein Simulationswert für die Temperatur an der Außenoberfläche des Registers 5 ermittelt wird. Die erste Pumpe 39 wird mittels der Steuer- und/oder Regeleinrichtung derart in Abhängigkeit von dem Simulationswert und dem Messsignal des Umgebungstemperatursensors angesteuert, dass die Temperatur an der Außenoberfläche des Registers 5 nicht unter den Messwert für die Umgebungstemperatur fällt.

Wenn die Temperatur an der Außenoberfläche des Registers 5 einen vorbestimmten Grenzwert unterschreitet, wird warmer Wärmeträger aus dem Wärmespeicher 20 und/oder dem Heizkessel 21 in den Solarkollektor 2 gepumpt. Dabei wird die erste Pumpe 39 in kurzen Intervallen betrieben, die beispielsweise eine Intervalldauer von 4 bis 16 Sekunden haben können.

Der mittlere Volumenstrom des in den Solarkollektor 2 geförderten Wärmeträgers ist von der Umgebungstemperatur, der Temperatur an der Außenoberfläche des Registers 5, der Größe bzw. Wärmekapazität des Solarkollektors 2 und der Vorlauftemperatur abhängig.

## Patentansprüche

1. Solaranlage (1) mit einem Solarkollektor (2), der mindestens eine Kollektorröhre mit einem Hüllrohr (6) aufweist, in das ein Register (5) eingreift, wobei zwischen dem Hüllrohr (6) und dem Register (5) eine mit der Atmosphäre verbundene Innenhöhlung (12) gebildet ist, und wobei das Register (5) mit einer Zuleitung (17) und einer Ableitung (19) verbunden ist, mittels welchen dem Register (5) ein Wärmeträger zuführbar beziehungsweise entnehmbar ist, **dadurch gekennzeichnet, dass** das Register (5) zumindest abschnittweise aus einem nicht rostfreien, warm- und druckfester Stahl besteht, und dass die Solaranlage (1) eine Schutzeinrichtung aufweist, die derart ausgestaltet ist, dass die Bildung von Kondenswasser an der dem Wärmeträger abgewandten Außenoberfläche des Registers (5) verhindert wird.

2. Solaranlage (1) nach Anspruch 1, **dadurch gekennzeichnet, dass** die Schutzeinrichtung eine Heizeinrichtung für das Register (5), einen Umgebungstemperatursensor (42) zur Erfassung der Umgebungstemperatur des Solarkollektors (2) und einen Kollektorausgangstemperatursensor (43) zur Erfassung der Kollektortemperatur an der Ableitung (19) des Solarkollektors (2) aufweist, und dass der Umgebungstemperatursensor (42) und der Kollektorausgangstemperatursensor (43) über eine Steuer- und/oder Regeleinrichtung (48) mit der Heizeinrichtung verbunden sind.

3. Solaranlage (1) nach Anspruch 2, **dadurch gekennzeichnet, dass** die Heizeinrichtung einen Wärmespeicher (20) aufweist, der über die Zuleitung (17) und die Ableitung (19) mit dem Solarkollektor (2) zu einem Wärmeträgerkreislauf verbunden ist, dass in dem Wärmeträgerkreislauf eine Pumpe (39, 40) angeordnet ist, und dass der Umgebungstemperatursensor (42) und der Kollektorausgangstemperatursensor (43) über die Steuer- und/oder Regeleinrichtung (48) mit der Pumpe (39, 40) verbunden sind.

4. Solaranlage (1) nach Anspruch 2 oder 3, **dadurch gekennzeichnet, dass** die Steuer- und/oder Regeleinrichtung (48) derart ausgestaltet ist, dass die Kollektorausgangstemperatur nicht unter die Umgebungstemperatur fällt.

5. Solaranlage (1) nach einem der Ansprüche 2 bis 4, **dadurch gekennzeichnet, dass** die Steuer- und/oder Regeleinrichtung (48) derart ausgestaltet ist, dass die Kollektortemperatur an der Ableitung (19) des Solarkollektors (2) einen vorbestimmten Mindestwert nicht unterschreitet.

6. Solaranlage (1) nach einem der Ansprüche 3 bis 5, **dadurch gekennzeichnet, dass** die Steuer- und/oder Regeleinrichtung (48) einen Speicher (49) aufweist, in dem thermische Kenngrößen für den Solarkollektor (2), die Zuleitung (17), die Ableitung (19) und den Wärmeträger abgelegt sind, dass die Schutzeinrichtung einen Volumenstromsensor (47) zur Erfassung des dem Solarkollektor (2) zugeführten Wärmeträger-Volumenstroms, einen Vorlauftemperatursensor (44) zur Erfassung der Vorlauftemperatur des in der Ableitung (19) befindlichen Wärmeträgers und einen Rücklauftemperatursensor (45) zur Erfassung der Rücklauftemperatur des in der Zuleitung (17) befindlichen Wärmeträgers aufweist, und dass die Steuer- und/oder Regeleinrichtung (48) einen mit dem Speicher (49) verbundenen Mikroprozessor (50) aufweist, dass in dem Speicher (49) ein auf dem Mikroprozessor (50) ablaufbares Betriebsprogramm abgelegt ist, mittels welchem aus den Kenngrößen und Messsignalen für den Volumenstrom, die Rücklauftemperatur, die Umgebungstemperatur und die Kollektortemperatur an der Ableitung (18) des Solarkollektors (2) durch eine Echtzeitsimulation der Temperaturen in der Zuleitung (17) und eine Berechnung der Auskühlgeschwindigkeit der im Freien liegenden Anlagenteile der Solaranlage (1) eine Pumprate ermittelt wird, mit der die Pumpe (39, 40) mittels der Steuer- und/oder Regeleinrichtung (48) derart ansteuerbar ist, dass die Temperatur an der Außenoberfläche des Registers (5) und in der Zuleitung (5) nicht unter einen bestimmten Grenzwert oberhalb der Umgebungstemperatur fällt.

7. Solaranlage (1) nach Anspruch 6, **dadurch gekennzeichnet, dass** der Wärmespeicher (20) in einem Gebäude (41) und der Solarkollektor (2) im Freien angeordnet ist, und dass die Kenngrößen Kennwerte für
- die Länge und der Inhalt eines innerhalb des Gebäudes (41) befindlichen Leitungsabschnitts der Zuleitung (17),
- die Länge und der Inhalt eines im Freien befindlichen Leitungsabschnitts der Zuleitung (17),
- die Länge und der Inhalt eines innerhalb des Gebäudes (17) befindlichen Leitungsabschnitts der Ableitung (19),
- die Länge und der Inhalt eines im Freien befindlichen Leitungsabschnitts der Ableitung (19), und
- die Größe des Solarkollektors (2)
umfassen.

8. Solaranlage (1) nach einem der Ansprüche 3 bis 7, **dadurch gekennzeichnet, dass** die Steuer- und/oder Regeleinrichtung (48) derart ausgestaltet ist, dass die Pumpe (39, 40) im Intervallbetrieb betreibbar ist.

9. Solaranlage (1) nach einem der Ansprüche 1 bis 8, **dadurch gekennzeichnet, dass** der nicht rostfreie, warm- und druckfeste Stahl normalgeglüht ist.

10. Solaranlage (1) nach einem der Ansprüche 1 bis 9, **dadurch gekennzeichnet, dass** das Hüllrohr (5) als Vakuumröhre mit einer Außenwand (7) und einer davon beabstandeten Innenwand (8) ausgestaltet ist, zwischen denen ein evakuierter Zwischenraum (11) angeordnet ist.

## Claims

1. Solar array (1) having a solar collector (2), which comprises at least one collector tube with a cladding tube (6), in which a register (5) engages, wherein between the cladding tube (6) and the register (5) an interior cavity (12) that is connected to the atmosphere is formed, and wherein the register (5) is connected to a feed line (17) and a discharge line (19), by means of which a heat transfer medium can be fed to or removed from the register (5), **characterized in that** the register (5) at least in portions consists of a non-rustproof, heat and pressure resistant steel, and **in that** the solar array (1) comprises a protective device which is configured in such a manner that the formation of condensate on the outer surface of the register (5) facing away from the heat transfer medium is prevented.

2. Solar array (1) according to Claim 1, **characterized in that** the protective device comprises a heating device for the register (5), an ambient temperature sensor (42) for detecting the ambient temperature of the solar collector (2) and a collector outlet temperature sensor (43) for detecting the collector temperature on the discharge line (19) of the solar collector (2), and **in that** the ambient temperature sensor (42) and the collector outlet temperature sensor (43) are connected to the heating device via a control and/or regulating device (48).

3. Solar array (1) according to Claim 2, **characterized in that** the heating device comprises a heat storage unit (20), which is connected to the solar collector (2) to form a heat transfer medium circuit via the feed line (17) and the discharge line (19), **in that** in the heat transfer medium circuit a pump (39, 40) is arranged, and **in that** the ambient temperature sensor (42) and the collector outlet temperature sensor (43) are connected to the pump (39, 40) via the control and/or regulating device (48).

4. Solar array (1) according to Claim 2 or 3, **characterized in that** the control and/or regulating device (48) is configured in such a manner that the collector outlet temperature does not fall below the ambient temperature.

5. Solar array (1) according to any one of the Claims 2 to 4, **characterized in that** the control and/or regulating device (48) is configured in such a manner that the collector temperature on the discharge line (19) of the solar collector (2) does not fall below a predetermined minimum value.

6. Solar array (1) according to any one of the Claims 3 to 5, **characterized in that** the control and/or regulating device (48) comprises a memory (49), in which thermal characteristic variables for the solar collector (2), the feed line (17), the discharge line (19) and the heat transfer medium are stored, **in that** the protective device comprises a volume flow rate sensor (47) for detecting the heat transfer medium volume flow rate fed to the solar collector (2), an advance temperature sensor (44) for detecting the advance temperature of the heat transfer medium that is present in the discharge line (19) and a return temperature sensor (45) for detecting the return temperature of the heat transfer medium that is present in the feed line (17), and **in that** the control and/or regulating device (48) comprises a microprocessor (50) that is connected to the memory (49), **in that** in the memory (49) an operating program that can be executed on the microprocessor (50) is stored, by means of which from the characteristic variables and measurement signals for the volume flow rate, the return temperature, the ambient temperature and the collector temperature on the discharge line (18) of the solar collector (2) a pump rate is determined through a real-time simulation of the temperatures in the feed line (17) and a calculation of the cooling-down speed of the array components of the solar array (1) which are located in the open, with which the pump (39, 40) by means of the control and/or regulating device (48) can be activated in such a manner that the temperature on the outer surface of the register (5) and in the feed line (5) does not fall below a determined limit value above the ambient temperature.

7. Solar array (1) according to Claim 6, **characterized in that** the heat storage unit (20) is arranged in a building (41) and the solar collector (2) in the open, and **in that** the characteristic variables comprise characteristic values for
- the length and the content of a line portion of the feed line (17) located within the building (41),
- the length and the content of a line portion of the feed line (17) located in the open,
- the length and the content of a line portion of the discharge line (19) located within the building (17),
- the length and the content of a line portion of the discharge line (19) located in the open, and
- the size of the solar collector (2).

8. Solar array (1) according to any one of the Claims 3 to 7, **characterized in that** the control and/or regulating device (48) is configured in such a manner that the pump (39, 40) can be operated in intermittent mode.

9. Solar array (1) according to any one of the Claims 1 to 8, **characterized in that** the non-rustproof heat and pressure-resistant steel is normalized.

10. Solar array (1) according to any one of the Claims 1 to 9, **characterized in that** the cladding tube (5) is configured as vacuum tube with an outer wall (7) and an inner wall (8) spaced from the former, between which an evacuated intermediate space (11) is arranged.

## Revendications

1. Installation solaire (1) présentant un collecteur solaire (2) équipé d'au moins un tube de collecteur doté d'un tube d'enveloppe (6) dans lequel pénètre un registre (5),
une cavité intérieure (12) reliée à l'atmosphère étant formée entre le tube d'enveloppe (6) et le registre (5),
le registre (5) étant raccordé à un conduit d'amenée (17) et a un conduit d'évacuation (19) au moyen desquels un fluide caloporteur peut être amené ou au registre (5) ou en être prélevé,
**caractérisée en ce que**
le registre (5) est réalisé au moins en partie en acier non inoxydable, résistant à la chaleur et à la pression et
**en ce que** l'installation solaire (1) présente un dispositif de protection configuré de telle sorte que la formation d'eau de condensation soit empêchée sur la surface extérieure, non tournée vers le fluide caloporteur, du registre (5).

2. Installation solaire (1) selon la revendication 1, **caractérisée en ce que** le dispositif de protection présente un dispositif de chauffage du registre (5), un capteur (42) de température ambiante qui saisit la température ambiante du collecteur solaire (2) et un capteur (43) de température de sortie du collecteur qui saisit la température du collecteur au conduit d'évacuation (19) du collecteur solaire (2) et **en ce que** le capteur (42) de température ambiante et le capteur (43) de température de sortie du collecteur sont reliés au dispositif de chauffage par l'intermédiaire d'un dispositif (48) de commande et/ou de régulation.

3. Installation solaire (1) selon la revendication 2, **caractérisée en ce que** le dispositif de chauffage présente un accumulateur de chaleur (20) qui est raccordé par l'intermédiaire du conduit d'amenée (17) et du conduit d'évacuation (19) au collecteur solaire (2) pour former un circuit de fluide caloporteur, **en ce qu'**une pompe (39, 40) est disposée dans le circuit de fluide caloporteur et **en ce que** le capteur (42) de température ambiante et le capteur (43) de température de sortie du collecteur sont raccordés à la pompe (39, 40) par l'intermédiaire du dispositif (48) de commande et/ou de régulation.

4. Installation solaire (1) selon les revendications 2 ou 3, **caractérisée en ce que** le dispositif (48) de commande et/ou de régulation est configuré de telle sorte que la température de sortie du collecteur ne tombe pas en dessous de la température ambiante.

5. Installation solaire (1) selon l'une des revendications 2 à 4, **caractérisée en ce que** le dispositif (48) de commande et/ou de régulation est configuré de telle sorte que la température du collecteur au niveau du conduit d'évacuation (19) du collecteur solaire (2) ne descende pas en dessous d'une valeur minimale prédéterminée.

6. Installation solaire (1) selon l'une des revendications 3 à 5, **caractérisée en ce que** le dispositif (48) de commande et/ou de régulation présente une mémoire (49) dans laquelle des grandeurs caractéristiques thermiques du collecteur solaire (2), du conduit d'amenée (17), du conduit d'évacuation (19) et du fluide caloporteur sont conservées, **en ce que** le dispositif de protection présente un capteur (47) de débit volumique qui saisit le débit volumique de fluide caloporteur apporté au collecteur solaire (2), un capteur (44) de température de départ qui saisit la température de départ du fluide caloporteur présent dans le conduit d'évacuation (19) et un capteur (45) de température de retour qui saisit la température de retour du fluide caloporteur présente dans le conduit d'amenée (17) et **en ce que** le dispositif (48) de commande et/ou de régulation présente un microprocesseur (50) raccordé à la mémoire (49), **en ce qu'**un programme de conduite qui peut être exécuté sur le microprocesseur (50) est conservé dans la mémoire (49) et permet de déterminer à partir des grandeurs caractéristiques des signaux de mesure du débit volumique, de la température de retour, de la température ambiante et de la température de collecteur sur le conduit d'évacuation (18) du collecteur solaire (2), par une simulation en temps réel des températures régnant dans le conduit d'amenée (17) et un calcul de la vitesse de refroidissement des parties de l'installation solaire (1) situées à l'air libre de déterminer un débit de pompage auquel la pompe (39, 40) peut être commandée au moyen du dispositif (48) de commande et/ou de régulation de telle sorte que la température qui règne sur la surface extérieure du registre (5) et dans le conduit d'amenée (5) ne descende pas en dessous d'une valeur limite définie au-dessus de la température ambiante.

7. Installation solaire (1) selon la revendication 6, **caractérisée en ce que** l'accumulateur de chaleur (20) est disposé dans un bâtiment (41) et le collecteur solaire (2) à l'air libre et **en ce que** les grandeurs caractéristiques comprennent des valeurs caractéristiques de:
- la longueur et le contenu d'une partie du conduit d'amenée (17) située à l'intérieur du bâtiment (41),
- la longueur et le contenu d'une partie du conduit d'amenée (17) située à l'air libre,
- la longueur et le contenu d'une partie du conduit d'évacuation (19) située à l'intérieur du bâtiment (17),
- la longueur et le contenu d'une partie du conduit d'évacuation (19) située à l'air libre et
- la taille du collecteur solaire (2).

8. Installation solaire (1) selon l'une des revendications 3 à 7, **caractérisée en ce que** le dispositif (48) de commande et/ou de régulation est configuré de telle sorte que la pompe (39, 40) puisse fonctionner de manière intermittente.

9. Installation solaire (1) selon l'une des revendications 1 à 8, **caractérisée en ce que** l'acier non inoxydable, résistant à la chaleur et à la pression, est un acier ayant subi un recuit normal.

10. Installation solaire (1) selon l'une des revendications 1 à 9, **caractérisée en ce que** le tube d'enveloppe (5) est configuré comme tube sous vide doté d'une paroi extérieure (7) et d'une paroi intérieure (8) située à distance de la précédente et entre lesquelles est disposé un espace intermédiaire (11) placé sous vide.
